# FASCICULE DE BREVET EUROPEEN

(11) **EP 2 468 630 B1**
(45) Date de publication et mention de la délivrance du brevet: **21.01.2015**
(21) Numéro de dépôt: 11193538.3
(22) Date de dépôt: 14.12.2011
(51) Int. Cl.: B64G 1/22, B64G 1/44

(54) **Structure deployable formant une antenne equipee d'un generateur solaire pour un satellite**
Entfaltbare Struktur, die eine mit einem Sonnenenergiegenerator ausgestattete Antenne für einen Satelliten bildet
Extendable structure forming an antenna provided with a solar generator for a satellite

(30) Priorité: 23.12.2010 FR 1005094
(43) Date de publication de la demande: 27.06.2012
(73) Titulaire: Thales, 92200 Neuilly Sur Seine (FR)
(72) Inventeur: Baudasse, Yannick, 06130 Grasse (FR); Vezain, Stéphane, 06210 Mandelieu (FR)
(74) Mandataire: Collet, Alain

(56) Documents cités:
- FR-A1- 2 763 747
- FR-A1- 2 863 023
- US-B1- 7 104 506

## Description

L'invention se situe dans le domaine des structures déployables pouvant équiper les satellites. Elle concerne une telle structure déployable constituée de panneaux formant une antenne équipée d'un générateur solaire.

FR 2863023 est considéré comme l'état de la technique le plus proche.

Les satellites sont notamment utilisés comme systèmes radars. Ils comportent à cet effet une antenne radar prenant la forme d'un panneau plan en configuration de fonctionnement. Ce panneau plan présente généralement des dimensions telles qu'il ne peut pas être placé en configuration de fonctionnement sous la coiffe du lanceur permettant de mettre en orbite le satellite. Par conséquent, une antenne radar est généralement formée par une structure dite déployable. Une telle structure comprend un ensemble de panneaux d'antenne articulés entre eux de manière à pouvoir prendre une configuration de stockage pour le lancement, dans laquelle les panneaux sont empilés les uns sur les autres, et une configuration de fonctionnement après la mise en orbite du satellite, dans laquelle les panneaux d'antenne sont déployés et forment un panneau plan. Plus précisément, en configuration de stockage, les panneaux d'antenne sont empilés de part et d'autre de la caisse du satellite sur deux faces opposées. Les panneaux sont articulés à partir d'un panneau d'antenne central fixé sur une troisième face de la caisse. Les satellites nécessitent également une source d'énergie électrique, généralement fournie à partir de générateurs solaires comportant des panneaux solaires. Les missions étant de plus en plus "coûteuses" en énergie, elles nécessitent des panneaux solaires de plus en plus grands. Une augmentation de la dimension des panneaux solaires pose cependant des problèmes, aussi bien pour la configuration de stockage que pour la configuration de fonctionnement de l'antenne radar. En effet, la caisse du satellite forme globalement un volume parallélépipédique dont les deux faces sur lesquelles sont empilés les panneaux d'antenne en configuration de stockage présentent une plus grande largeur que la troisième face sur laquelle est fixé le panneau d'antenne central. En conséquence, le volume disponible pour le stockage des panneaux solaires au niveau de la face opposée à la troisième face est relativement limité. En configuration de fonctionnement, les panneaux solaires sont déployés et déportés de la caisse du satellite. Par conséquent, les panneaux d'antenne et les panneaux solaires risquent de se faire de l'ombre mutuellement. Les panneaux solaires sont susceptibles de perturber le fonctionnement de l'antenne radar.

Un but de l'invention est notamment de remédier aux inconvénients précités en permettant à un satellite de comporter une antenne formée par une structure déployable et des panneaux solaires relativement grands, sans que l'antenne et les panneaux solaires ne se fassent de l'ombre mutuellement. A cet effet, l'invention a pour objet une structure déployable pouvant équiper un satellite, comportant :
■ un ensemble de panneaux d'antenne présentant chacun une surface utile sensiblement rectangulaire, les panneaux d'antenne étant aboutés les uns aux autres par des premiers côtés parallèles entre eux,
■ au moins un panneau solaire photovoltaïque, chaque panneau solaire photovoltaïque étant abouté à un panneau d'antenne par un deuxième côté dudit panneau d'antenne, perpendiculaire aux premiers côtés,
■ des premiers systèmes d'articulation, chacun desdits système d'articulation permettant de faire pivoter un panneau d'antenne par rapport à un panneau d'antenne adjacent selon un axe sensiblement parallèle aux premiers côtés desdits panneaux d'antenne,
■ un deuxième système d'articulation pour chaque panneau solaire photovoltaïque, chacun desdits systèmes d'articulation permettant de faire pivoter un panneau solaire photovoltaïque par rapport au panneau d'antenne auquel il est abouté selon un axe sensiblement parallèle au deuxième côté dudit panneau d'antenne.

L'invention a notamment pour avantage qu'elle permet de prévoir les mêmes systèmes de gerbage, de déploiement et d'articulation pour les panneaux d'antenne et les panneaux solaires.

L'invention sera mieux comprise et d'autres avantages apparaîtront à la lecture de la description qui va suivre, faite en regard de dessins annexés sur lesquels :
- les figures 1A et 1B représentent schématiquement, dans une vue en perspective et dans une vue en coupe transversale, respectivement, une coiffe de lanceur dans laquelle est installé un satellite comprenant une antenne radar dans une configuration de stockage ;
- la figure 2 représente schématiquement, dans une vue en perspective, le satellite des figures 1A et 1B équipé de l'antenne radar dans une configuration de fonctionnement ;
- les figures 3A, 3B et 3C représentent schématiquement, dans une vue de face, dans une vue en coupe longitudinale, et dans une vue en coupe transversale, respectivement, la coiffe de lanceur dans laquelle est installé un satellite comprenant un exemple de structure déployable selon l'invention dans la configuration de stockage ;
- la figure 4 représente schématiquement, dans une vue en perspective, le satellite comprenant la structure déployable des figures 3A, 3B et 3C dans la configuration de fonctionnement ;
- les figures 5A, 5B, 5C et 5D représentent schématiquement un exemple de système d'articulation permettant de relier deux panneaux de la structure déployable entre eux ;
- les figures 6A, 6B, 6C, 6D et 6E illustrent un exemple de cinématique de déploiement de la structure déployable des figures 3A, 3B, 3C et 4 ;
- la figure 7 représente schématiquement, dans une vue en perspective, un satellite comprenant un autre exemple de structure déployable selon l'invention dans la configuration de fonctionnement.

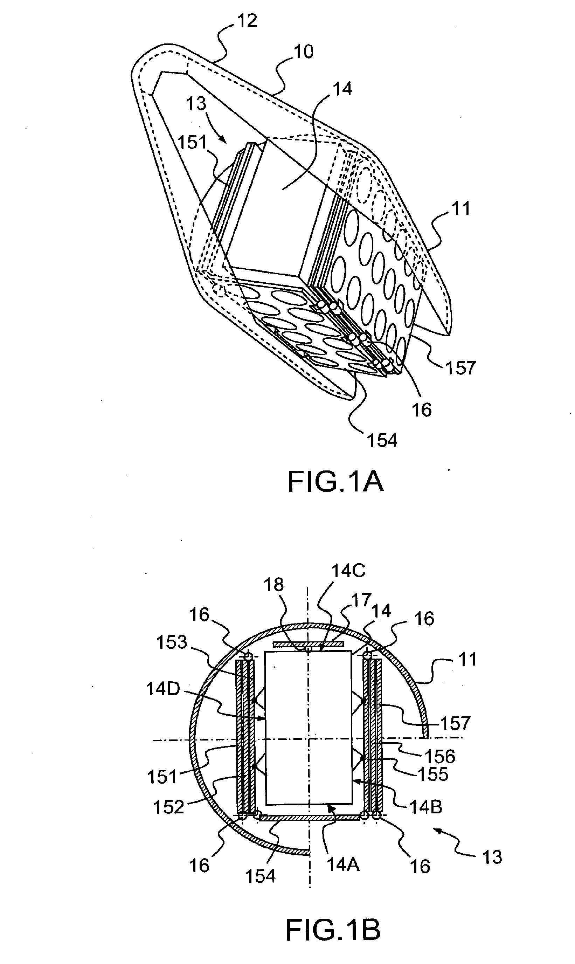

Les figures 1A et 1B représentent schématiquement, dans une vue en perspective et dans une vue en coupe transversale, respectivement, une coiffe de lanceur dans laquelle est installé un satellite comprenant une antenne radar dans une configuration de stockage. La coiffe de lanceur 10 comprend une portion cylindrique creuse 11 et une portion conique 12. Un satellite 13 est installé dans la portion cylindrique creuse 11. Le satellite 13 comporte une caisse 14 de forme globalement parallélépipédique. La caisse 14 comporte quatre faces latérales extérieures 14A, 14B, 14C et 14D aptes à recevoir des structures déployables. En l'occurrence, le satellite 13 est équipé d'une antenne déployable 15 formée d'un ensemble de panneaux d'antenne 151 à 157 articulés entre eux par des systèmes d'articulation 16. Les panneaux d'antenne 151-157 présentent une forme sensiblement rectangulaire. Un premier panneau d'antenne 154 est fixé sur la face 14A de la caisse 14. La face 14A et la face opposée 14C présentent une largeur plus faible que les faces 14B et 14D. Le panneau d'antenne 154 ou directement le satellite 13 est relié à deux autres panneaux d'antenne 153 et 155 par des systèmes d'articulation 16. Les panneaux d'antenne 153 et 155 sont respectivement reliés à un panneau d'antenne 152 et à un panneau d'antenne 156, par des systèmes d'articulation 16. Les panneaux d'antenne 152 et 156 sont eux-mêmes reliés à des panneaux d'antenne 151 et 157 par des systèmes d'articulation 16. Dans la configuration de stockage représentée sur les figures 1A et 1B, les panneaux d'antenne 151 à 153 d'une part, et 155 à 157 d'autre part, sont empilés parallèlement les uns aux autres. Les panneaux d'antenne 151-153 sont repliés par rapport au panneau d'antenne 154 de manière à ce que le panneau d'antenne 153 vienne en appui sur la face 14D de la caisse 14. Les panneaux d'antenne 155-157 sont repliés par rapport au panneau d'antenne 154 de manière à ce que le panneau d'antenne 155 vienne en appui sur la face 14B de la caisse 14. Le satellite 13 est également équipé d'un générateur solaire comprenant un panneau solaire photovoltaïque 17 relié à la face 14C par un bras d'éloignement 18. Les panneaux d'antenne 151-157 doivent pouvoir former une surface d'antenne relativement étendue. Pour cette raison, ils sont empilés sur les faces 14B et 14D présentant la plus grande largeur. Le volume disponible pour le panneau solaire 17 est ainsi réduit. Le panneau solaire 17 peut donc difficilement présenter de grandes dimensions.

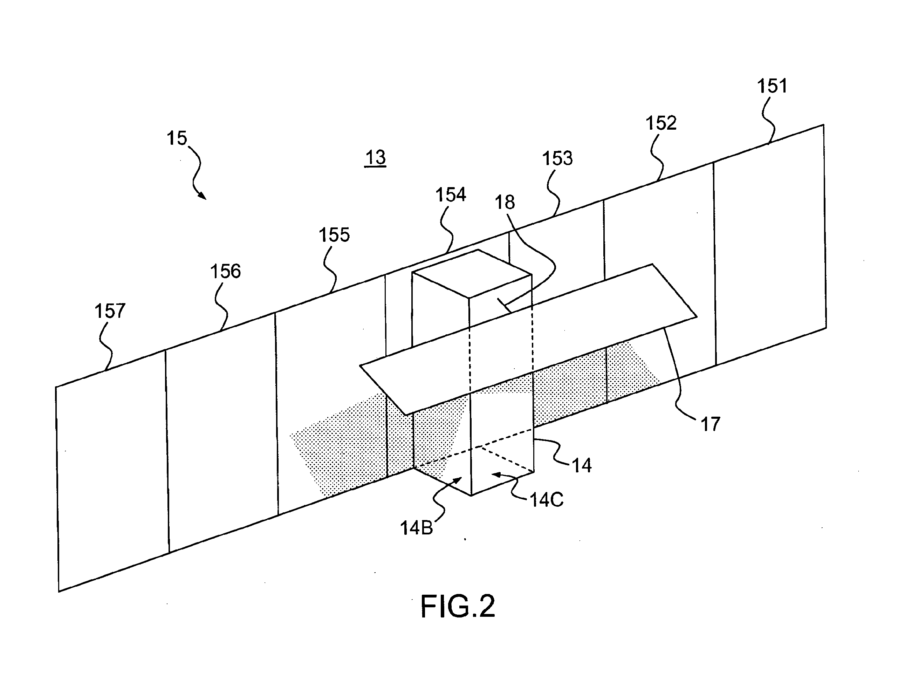

La figure 2 représente schématiquement, dans une vue en perspective, le satellite 13 équipé de l'antenne déployable 15 dans la configuration de fonctionnement, également appelée configuration opérationnelle. Dans cette configuration, le panneau d'antenne 154 est abouté par deux côtés opposés aux panneaux d'antenne 153 et 155. De manière analogue, les panneaux d'antenne 151 et 152 d'une part, et 156 et 157 d'autre part, sont aboutés en série aux panneaux d'antenne 153 et 155, respectivement, de manière à former globalement une surface utile rectangulaire sensiblement plane et continue. Le panneau solaire 17 est déporté de la caisse 14 par le bras d'éloignement 18. Dans certaines configurations du satellite 13 relatives à l'orientation de l'antenne 15 et du panneau solaire 17, ainsi qu'à la position relative du soleil, le panneau solaire 17 est susceptible de faire écran entre le soleil et l'antenne 15. Le fonctionnement de l'antenne 15 en est alors dégradé du fait des déformations thermoélastiques qu'elle subit.

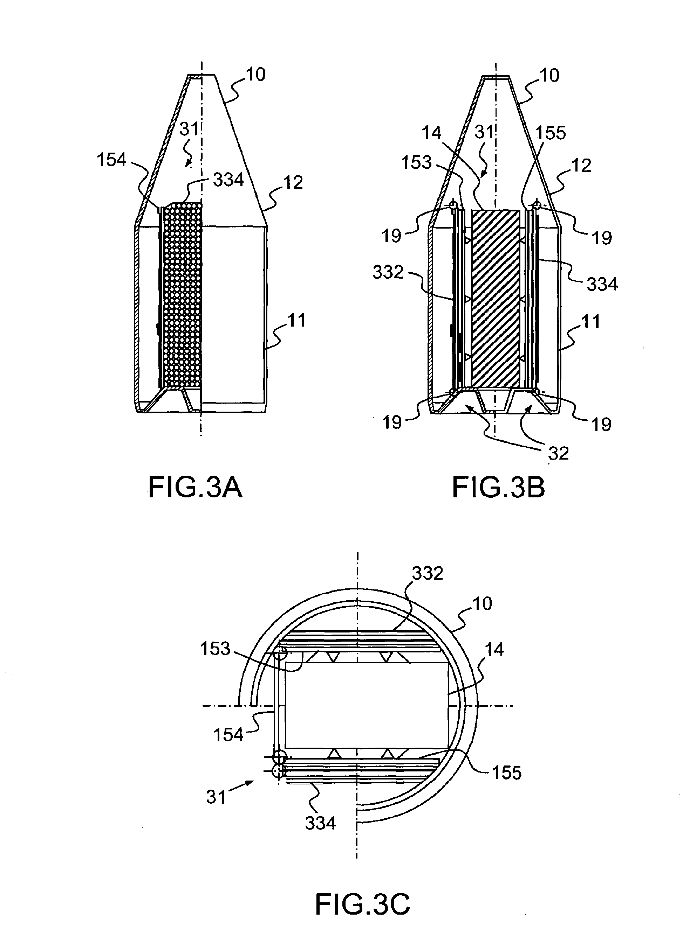

Les figures 3A, 3B et 3C représentent schématiquement, dans une vue de face, dans une vue en coupe longitudinale, et dans une vue en coupe transversale, respectivement, une coiffe de lanceur dans laquelle est installé un satellite comprenant un exemple de structure déployable selon l'invention dans la configuration de stockage. Le satellite 31 selon l'invention se distingue essentiellement du satellite 13 décrit en référence aux figures 1A, 1B et 2, en ce qu'il est équipé d'une structure déployable 32 comportant à la fois les panneaux d'antenne 151 à 157 formant l'antenne déployable 15, et des panneaux solaires 331 à 334. L'antenne déployable 15 équipant le satellite 31 est sensiblement identique à celle équipant le satellite 13. Le premier panneau d'antenne 154 est fixé sur la face 14A de la caisse 14. Les panneaux d'antenne 151 à 153 d'une part, et 155 à 157 d'autre part, sont reliés en série de part et d'autre du panneau d'antenne 154 par les systèmes d'articulation 16. Ces panneaux d'antenne 151-153 et 155-157 peuvent être fixés soit à la caisse 14 du satellite 13, soit au panneau d'antenne 154. Dans la configuration de stockage représentée sur les figures 3A, 3B et 3C, les panneaux d'antenne 151-153 d'une part, et 155-157 d'autre part, sont empilés parallèlement les uns aux autres. Les panneaux d'antenne 151-153 sont repliés par rapport au panneau d'antenne 154 de manière à ce que le panneau d'antenne 153 vienne en appui sur la face 14D de la caisse 14. Les panneaux d'antenne 155-157 sont repliés par rapport au panneau d'antenne 154 de manière à ce que le panneau d'antenne 155 vienne en appui sur la face 14B de la caisse 14. La structure déployable 32 comprend en outre quatre panneaux solaires 331 à 334. Les panneaux solaires 331 et 332 sont reliés au panneau d'antenne 151 par des systèmes d'articulation 19. Les panneaux solaires 333 et 334 sont reliés au panneau d'antenne 157 par des systèmes d'articulation 19. Dans la configuration de stockage représentée sur les figures 3A, 3B et 3C, les panneaux d'antenne 151-153, et les panneaux solaires 331 et 332 sont empilés parallèlement les uns aux autres, le panneau d'antenne 153 étant en appui sur la face 14D de la caisse 14, et le panneau solaire 332 formant la dernière couche extérieure de l'empilement des panneaux. Les panneaux d'antenne 155-157, et les panneaux solaires 333 et 334 sont empilés parallèlement les uns aux autres, le panneau d'antenne 155 étant en appui sur la face 14B de la caisse 14, et le panneau solaire 334 formant la dernière couche extérieure de l'empilement des panneaux. Cette position permet leur ouverture dans les premières phases de la mise en orbite du satellite 13, permettant ainsi une alimentation en énergie du satellite. Cette ouverture partielle assure la survie de l'engin spatial et facilite son pilotage lors de sa mise à poste du fait d'une structure déployée de dimensions réduites. La largeur des panneaux solaires 331-334 peut être légèrement inférieure à celle des panneaux d'antenne 151-157 de manière à se conformer à l'espace disponible dans la portion cylindrique creuse 11 de la coiffe du lanceur 10.

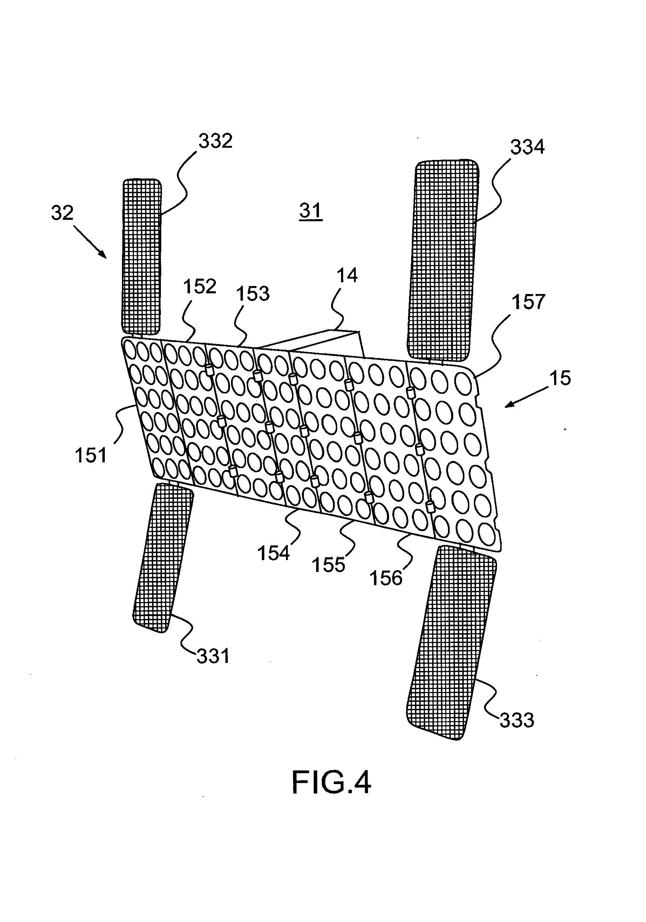

La figure 4 représente schématiquement, dans une vue en perspective, le satellite 31 équipé de la structure déployable 32 dans la configuration de fonctionnement. Dans cette configuration, les panneaux d'antenne 151-157 sont aboutés en série par leurs côtés de plus grande largeur de manière à former globalement une surface utile rectangulaire 15A sensiblement plane et continue. Les panneaux solaires 331 et 332 sont déployés de part et d'autre du panneau d'antenne 151. Le panneau d'antenne 151 est abouté par l'un de ses côtés de plus petite largeur à l'un des côtés de plus petite largeur du panneau solaire 331 et par le côté opposé à l'un des côtés de plus petite largeur du panneau solaire 332. De manière analogue, les panneaux solaires 333 et 334 sont déployés de part et d'autre du panneau d'antenne 157. Le panneau d'antenne 157 est abouté par l'un de ses côtés de plus petite largeur à l'un des côtés de plus petite largeur du panneau solaire 333 et par le côté opposé à l'un des côtés de plus petite largeur du panneau solaire 334. Les panneaux solaires 331-334 ne sont pas nécessairement déployés dans un même plan que le plan de la surface utile 15A de l'antenne déployable 15. Ils peuvent chacun former un angle avec la surface utile des panneaux d'antenne de manière à s'orienter vers le rayonnement solaire.

Pour pouvoir passer de la configuration de stockage à la configuration de fonctionnement, la structure déployable 32 comporte des systèmes d'articulation 16 et 19. Ces systèmes d'articulation 16 et 19 peuvent être structurellement identiques pour les liaisons entre panneaux d'antenne 151-157 et pour les liaisons entre panneaux d'antenne 151, 157 et panneaux solaires 331-334. Ils peuvent également être différents, comme cela est généralement le cas lorsqu'une structure déployable est apte à se déployer selon deux orientations orthogonales. Un exemple d'articulation 19 se trouve notamment dans le brevet FR 2635077. Chaque système d'articulation 16 ou 19 doit pouvoir faire pivoter un panneau par rapport à un autre selon un axe sensiblement parallèle aux surfaces utiles de ces panneaux. Les axes de rotation des systèmes d'articulation 16 entre les différents panneaux d'antenne 151-157 sont sensiblement parallèles entre eux et aux côtés de plus grande largeur des panneaux d'antenne 151-157. Les axes de rotation des systèmes d'articulation 19 entre un panneau d'antenne 151, 157 et un panneau solaire 331-334 sont sensiblement parallèles aux côtés de plus petite largeur desdits panneaux.

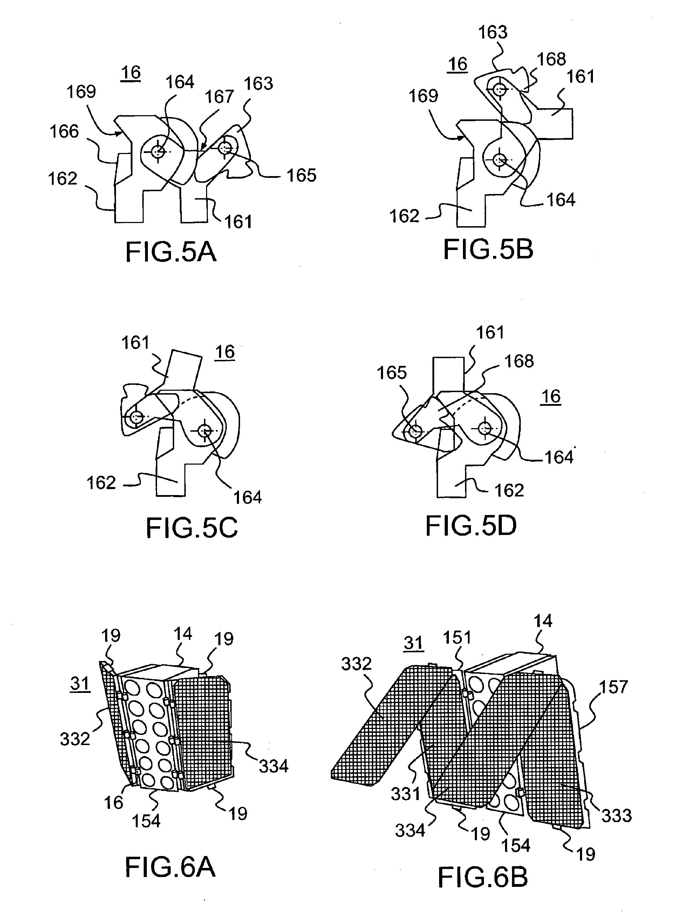

Les figures 5A à 5D représentent un exemple de système d'articulation permettant de relier deux panneaux entre eux. On considère à titre d'exemple le système d'articulation 16 entre le panneau d'antenne 151 et le panneau d'antenne 152. La figure 5A représente le système d'articulation dans une position correspondant à la configuration de stockage. Les figures 5B et 5C représentent le système d'articulation 16 dans des positions où les panneaux d'antenne 151 et 152 sont en cours de déploiement l'un par rapport à l'autre. La figure 5D représente le système d'articulation 16 dans une position correspondant à la configuration de fonctionnement, les panneaux d'antenne 151 et 152 étant déployés. Le système d'articulation 16 comporte une première pièce 161 sur laquelle le panneau d'antenne 151 est destiné à être monté, une deuxième pièce 162 sur laquelle le panneau d'antenne 152 est destiné à être monté, et une troisième pièce 163. La deuxième pièce 162 est en liaison pivot par rapport à la première pièce 161 selon un premier axe 164. La troisième pièce 163 est en liaison pivot par rapport à la première pièce 161 selon un deuxième axe 165, sensiblement parallèle au premier axe 164. La deuxième pièce 162 comporte une butée 166 apte à venir en appui sur une surface d'appui 167 de la première pièce 161 dans la position correspondant à la configuration de fonctionnement, comme illustré sur la figure 5D. La butée 166 et la surface d'appui 167 permettent de limiter le mouvement de rotation entre les première et deuxième pièces 161, 162 une fois la position correspondant à la configuration de fonctionnement atteinte. La troisième pièce 163 comporte une butée anti-retour 168 apte à venir en appui sur une surface d'appui 169 de la deuxième pièce 162 dans la position correspondant à la configuration de fonctionnement. La butée anti-retour 168 et la surface d'appui 169 permettent d'empêcher un mouvement de rotation entre les première et deuxième pièces 161, 162 vers la position de stockage une fois la position déployée atteinte. Les systèmes d'articulation 16 assurent ainsi à la fois une fonction de guidage en rotation et une fonction de verrouillage des panneaux. Ils peuvent également assurer une fonction de motorisation consistant à entraîner les panneaux de la configuration de stockage à la configuration de fonctionnement. Le couple d'entraînement est par exemple fourni par un ressort spiral. Le déploiement des panneaux peut être déclenché par un dispositif pyrotechnique connu de l'état de la technique.

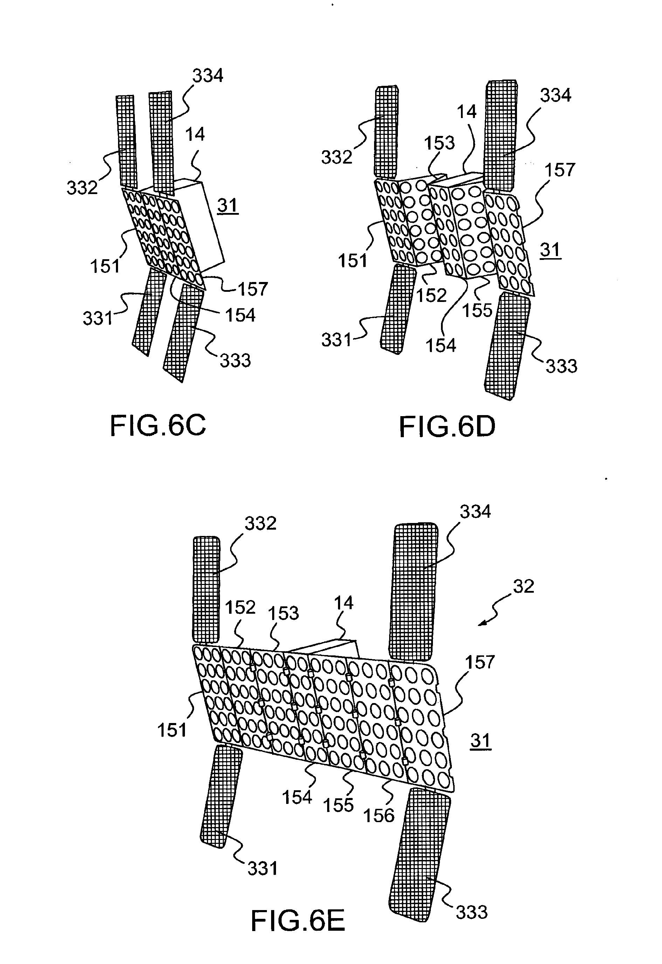

Les figures 6A à 6E illustrent un exemple de cinématique de déploiement de la structure déployable représentée sur les figures 3A, 3B, 3C et 4. La figure 6A représente le satellite 31 dans une première étape du déploiement de la structure déployable 32. Dans cette étape, les panneaux d'antenne 151 et 157 sont déployés. Ils sont entraînés en rotation par rapport aux panneaux d'antenne 152 et 156, respectivement, selon deux axes sensiblement parallèles aux côtés de plus grande largeur des panneaux d'antenne 152 et 156. Les panneaux solaires 331-334 étant reliés aux panneaux d'antenne 151 et 157, ils sont également entraînés en rotation selon ces axes. Les panneaux d'antenne 152, 153, 155 et 156 restent empilés contres les faces 14B et 14D de la caisse 14 du satellite 31. La figure 6B représente le satellite 31 dans une deuxième étape du déploiement de la structure déployable 32. Cette deuxième étape débute lorsque les panneaux d'antenne 151 et 157 ont atteint leur position correspondant à la configuration de fonctionnement de l'antenne 15. Les panneaux d'antenne 151 et 157 forment alors une surface plane avec le panneau d'antenne 154. Dans la deuxième étape, les panneaux solaires 332 et 334 sont déployés. Ils sont entraînés en rotation par rapport aux panneaux d'antenne 151 et 157, respectivement, selon deux axes sensiblement parallèles aux côtés de plus petite largeur des panneaux d'antenne 151 et 157. Les panneaux d'antenne 152, 153, 155 et 156 restent empilés contre la caisse 14. Les panneaux solaires 332 et 334 sont déployés jusqu'à atteindre la position souhaitée dans la configuration de fonctionnement. Les panneaux solaires 331 et 333 sont alors déployés dans une troisième étape. L'ouverture des panneaux solaires 331 et 333 peut être commandée par le verrouillage des systèmes d'articulation 16 permettant l'ouverture des panneaux d'antenne 151 et 157. Les panneaux solaires 331 et 333 sont entraînés en rotation par rapport aux panneaux d'antenne 151 et 157, respectivement, selon deux axes sensiblement parallèles aux côtés de plus petite largeur des panneaux d'antenne 151 et 157. Les panneaux solaires 331 et 333 sont déployés jusqu'à atteindre la position souhaitée dans la configuration de fonctionnement. Cette position est représentée sur la figure 6C. La figure 6D représente le satellite 31 dans une quatrième étape du déploiement de la structure déployable 32. Dans cette étape, les panneaux d'antenne non encore déployés le sont. En l'occurrence, les panneaux d'antenne 152, 153, 155 et 156 sont entraînés en rotation simultanément par rapport aux panneaux d'antenne 151, 154 et 157 selon des axes sensiblement parallèles aux côtés de plus grande largeur de ces panneaux d'antenne. Les panneaux d'antenne 152 et 153 d'une part, et 155 et 156 d'autre part, sont également entraînés en rotation l'un par rapport à l'autre selon deux axes sensiblement parallèles aux côtés de plus grande largeur de ces panneaux. Les panneaux d'antenne 152, 153, 155 et 156 sont déployés jusqu'à atteindre leur position correspondant à la configuration de fonctionnement, représentée sur la figure 6E.

La cinématique de déploiement de la structure déployable 32 peut différer de celle décrite en référence aux figures 6A à 6E. En l'occurrence, le déploiement des panneaux d'antenne 152-153 et 155-157 et des panneaux solaires 331-334 peut être déclenché avant la fin du déploiement des panneaux d'antenne 151 et 157.

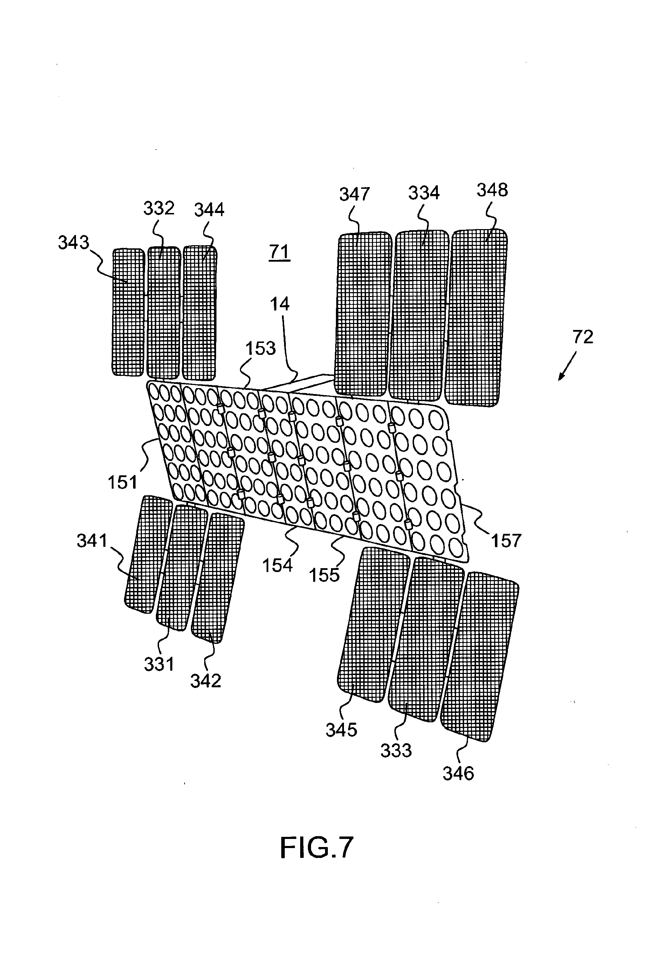

La structure déployable 32 peut comporter un plus grand nombre de panneaux solaires que celle représentée sur les figures 3A, 3B, 3C et 4. La figure 7 représente schématiquement, dans une vue en perspective, un satellite 71 équipé d'un exemple de structure déployable 72 selon l'invention comportant douze panneaux solaires dans la configuration de fonctionnement. Par rapport à la structure déployable 32 du satellite 31, la structure déployable 72 comporte un panneau solaire supplémentaire de part et d'autre de chaque panneau solaire 331-334. En d'autres termes, chaque panneau solaire comprend un panneau solaire principal relié à l'un des panneaux d'antenne 151 ou 157, et des panneaux solaires secondaires 341-348 reliés à ce panneau solaire principal 331-334. Le panneau solaire principal 331 est abouté à un premier panneau solaire secondaire 341 par l'un de ses côtés de plus grande dimension, et à un deuxième panneau solaire secondaire 342 par son côté opposé. Les panneaux solaires 331, 341 et 342 forment ainsi une surface utile rectangulaire sensiblement plane. Le panneau solaire 342 se trouve abouté par son côté de plus petite largeur au panneau d'antenne 152, sans être relié mécaniquement à ce panneau. De manière analogue, les panneaux solaires principaux 332, 333 et 334 sont chacun aboutés à un premier panneau solaire secondaire 343, 345 et 347, respectivement, et à un deuxième panneau solaire secondaire 344, 346 et 348, respectivement, par leurs côtés de plus grande dimension. Les panneaux solaires 331-334 et 341-348 peuvent être reliés entre eux par les mêmes systèmes d'articulations reliant les panneaux d'antenne 151-157 entre eux et les panneaux d'antenne 151, 157 aux panneaux solaires principaux 331-334. Chaque système d'articulation permet de faire pivoter un panneau solaire secondaire 341-348 par rapport à un panneau solaire principal 331-334 selon un axe parallèle aux côtés de plus grande dimension des panneaux solaires. Un avantage d'articuler des panneaux solaires entre eux plutôt que de les articuler individuellement avec un panneau d'antenne est que l'orientation de l'ensemble de ces panneaux solaires peut être réalisée par un seul système d'articulation, à savoir celui entre le panneau solaire principal 331, 332, 333 ou 334 et le panneau d'antenne 151 ou 157. Les systèmes d'articulation entre les panneaux solaires peuvent être beaucoup plus simples puisqu'ils doivent être configurés uniquement pour une seule position stable, à savoir celle correspondant à la configuration de fonctionnement où les panneaux sont dans un même plan. Dans la configuration de stockage, les panneaux solaires secondaires 341-348 peuvent être repliés parallèlement au panneau solaire principal 331-334 auquel ils sont reliés. Le déploiement de la structure déployable 72 comporte alors une étape supplémentaire consistant à entraîner en rotation les panneaux solaires secondaires 341-348 par rapport aux panneaux solaires principaux 331-334 selon des axes sensiblement parallèles aux côtés de plus grande largeur de ces panneaux solaires. L'ouverture des panneaux solaires 341-348 peut être commandée par le verrouillage des systèmes d'articulation 19 permettant l'ouverture des panneaux solaires principaux 331-334. Les panneaux solaires principaux 331-334 et secondaires 341-348 peuvent également être agencés dans la configuration de stockage de manière à pouvoir fournir de l'énergie électrique en déployant uniquement les panneaux d'antenne 151 et 157. Bien entendu, la structure déployable selon l'invention peut comporter un nombre quelconque de panneaux solaires reliés à n'importe quel panneau d'antenne, ou à n'importe quel panneau solaire.

## Revendications

1. Structure déployable pouvant équiper un satellite (71), **caractérisée en ce qu'**elle comporte :
▪ un ensemble de panneaux d'antenne (151-157) présentant chacun une surface utile sensiblement rectangulaire, les panneaux d'antenne étant aboutés les uns aux autres par des premiers côtés parallèles entre eux,
▪ au moins un panneau solaire photovoltaïque (331-334), chaque panneau solaire photovoltaïque présentant une surface utile sensiblement rectangulaire et étant abouté à un panneau d'antenne (151, 157) par un deuxième côté dudit panneau d'antenne, perpendiculaire aux premiers côtés,
▪ des premiers systèmes d'articulation (16), chacun desdits système d'articulation (16) permettant de faire pivoter un panneau d'antenne (151, 157) par rapport à un panneau d'antenne adjacent selon un axe sensiblement parallèle aux premiers côtés desdits panneaux d'antenne,
▪ un deuxième système d'articulation (19) pour chaque panneau solaire photovoltaïque (331-334), chacun desdits systèmes d'articulation (19) permettant de faire pivoter un panneau solaire photovoltaïque (331-334) par rapport au panneau d'antenne (151-157) auquel il est abouté selon un axe sensiblement parallèle au deuxième côté dudit panneau d'antenne,
au moins un panneau solaire photovoltaïque comprenant un panneau solaire photovoltaïque principal (331-334) et au moins un panneau solaire photovoltaïque secondaire (341-348), le panneau solaire photovoltaïque principal (331-334) étant abouté au panneau d'antenne considéré (151-157), chaque panneau solaire photovoltaïque secondaire (341-348) étant abouté au panneau solaire photovoltaïque principal (331-334) par l'un des côtés perpendiculaires au côté par lequel le panneau solaire photovoltaïque principal (331-334) est abouté au panneau d'antenne (151-157) considéré, la structure déployable (72) comportant en outre un troisième système d'articulation (16) pour chaque panneau solaire photovoltaïque secondaire (341-348), chacun desdits systèmes d'articulation permettant de faire pivoter le panneau solaire photovoltaïque secondaire (341-348) par rapport au panneau solaire photovoltaïque principal (331-334) selon un axe sensiblement parallèle aux côtés par lesquels ils sont aboutés.

2. Structure déployable selon la revendication 1, dans laquelle au moins un panneau solaire photovoltaïque comprenant un panneau solaire photovoltaïque principal (331-334) et au moins un panneau solaire photovoltaïque secondaire (341-348) comprend, en outre, au moins un panneau solaire photovoltaïque tertiaire, chaque panneau solaire photovoltaïque tertiaire étant abouté à un panneau solaire photovoltaïque secondaire (341-348) ou à un autre panneau solaire photovoltaïque tertiaire par des côtés parallèles aux côtés par lesquels les panneaux solaires primaire et secondaires sont aboutés entre eux, la structure déployable (72) comportant en outre un troisième système d'articulation (16) pour chaque panneau solaire photovoltaïque tertiaire, chacun desdits systèmes d'articulation permettant de faire pivoter le panneau solaire photovoltaïque tertiaire par rapport au panneau solaire photovoltaïque auquel il est abouté selon un axe sensiblement parallèle aux côtés par lesquels les panneaux solaires photovoltaïques primaire, secondaires (341-348) et tertiaire sont aboutés entre eux.

3. Structure déployable selon l'une des revendications 1 et 2, configurée de manière à ce que, dans une configuration de stockage, des panneaux d'antenne (151-153, 155-157) et les panneaux solaires (331-334, 341-348) soient empilés parallèlement les uns aux autres, et de manière à ce que, dans une configuration de fonctionnement, les panneaux d'antenne (151-157) forment globalement une surface utile (15A) sensiblement plane et continue et chaque panneau solaire (331-334, 341-348) forme localement une surface utile sensiblement plane et continue.

4. Structure déployable selon l'une des revendications précédentes, dans laquelle l'un des panneaux d'antenne (154) est apte à être fixé à une première face (14A) d'une caisse (14) du satellite (31, 71), des panneaux d'antenne (151-153) d'un premier sous-ensemble et les panneaux solaires photovoltaïques (331, 332) aboutés à l'un des panneaux d'antenne du premier sous-ensemble étant aptes à être empilés contre une deuxième face (14D) de la caisse (14), des panneaux d'antenne (155-157) d'un deuxième sous-ensemble et les panneaux solaires photovoltaïques (333, 334) aboutés à l'un des panneaux d'antenne du deuxième sous-ensemble étant aptes à être empilés contre une troisième face (14C) de la caisse (14), les deuxième et troisième faces (14C, 14D) de la caisse (14) étant sensiblement perpendiculaires à la première face (14A) de la caisse (14).

5. Structure déployable selon la revendication 4, dans laquelle les panneaux d'antenne (151-153) du premier sous-ensemble et les panneaux solaires photovoltaïques (331, 332) aboutés à l'un des panneaux d'antenne du premier sous-ensemble sont aptes à être empilés de manière à ce que l'un desdits panneaux solaires photovoltaïques (331, 332) forme la dernière couche extérieure de l'empilement des panneaux, les panneaux d'antenne (155-157) du deuxième sous-ensemble et les panneaux solaires photovoltaïques (333, 334) aboutés à l'un des panneaux d'antenne du deuxième sous-ensemble étant aptes à être empilés de manière à ce que l'un desdits panneaux solaires photovoltaïques (33, 334) forme la dernière couche extérieure de l'empilement des panneaux.

6. Structure déployable selon la revendication 5, dans laquelle les panneaux solaires photovoltaïques (331-334) tormant une dernière couche extérieure d'un empilement de panneaux sont aptes à être empilés de manière à ce que leur surface utile soit orientée vers l'extérieur.

## Patentansprüche

1. Entfaltbare Struktur zum Ausstatten eines Satelliten (71), **dadurch gekennzeichnet, dass** sie Folgendes umfasst:
▪ einen Satz von Antennenplatten (151-157), jeweils mit einer im Wesentlichen rechteckigen Nutzfläche, wobei die Antennenplatten auf ersten Seiten parallel zueinander aneinander anliegen;
▪ wenigstens eine photovoltaische Solarplatte (331-334), wobei jede photovoltaische Solarplatte eine im Wesentlichen rechteckige Nutzfläche hat und auf einer zweiten Seite der Antennenplatte senkrecht zu den ersten Seiten an einer Antennenplatte (151, 157) anliegt;
▪ erste Gelenksysteme (16), wobei jedes Gelenksystem (16) ein Schwenken einer Antennenplatte (151, 157) relativ zu einer benachbarten Antennenplatte entlang einer Achse im Wesentlichen parallel zu den ersten Seiten der Antennenplatten zulässt;
▪ ein zweites Gelenksystem (19) für jede photovoltaische Solarplatte (331-334), wobei jedes Gelenksystem (19) ein Schwenken einer photovoltaischen Solarplatte (331-334) relativ zur Antennenplatte (151-157), an der sie anliegt, entlang einer Achse im Wesentlichen parallel zur zweiten Seite der Antennenplatte zulässt,
wobei wenigstens eine photovoltaische Solarplatte eine photovoltaische Hauptsolarplatte (331-334) und wenigstens eine photovoltaische sekundäre Solarplatte (341-348) umfasst, wobei die fotovoltaische Hauptsolarplatte (331-334) an der betrachteten Antennenplatte (151-157) anliegt, wobei jede photovoltaische sekundäre Solarplatte (341-348) auf einer der Seiten senkrecht zu der Seite an der photovoltaischen Hauptsolarplatte (331-334) anliegt, auf der die photovoltaische Hauptsolaiplatte (331-334) an der betrachteten Antennenplatte (151-157) anliegt, wobei die entfaltbare Struktur (72) ferner ein drittes Gelenksystem (16) für jede photovoltaische sekundäre Solarplatte (341-348) umfasst, wobei jedes der Gelenksysteme ein Schwenken der photovoltaischen sekundären Solarplatte (341-348) relativ zu der photovoltaischen Hauptsolarplatte (331-334) entlang einer Achse im Wesentlichen parallel zu den Seiten zulässt, an denen sie anliegt.

2. Entfaltbare Struktur nach Anspruch 1, wobei wenigstens eine photovoltaische Solarplatte, die eine photovoltaische Hauptsolarplatte (331-334) und wenigstens eine photovoltaische sekundäre Solarplatte (341-348) umfasst, ferner wenigstens eine photovoltaische tertiäre Solarplatte umfasst, wobei jede photovoltaische tertiäre Solarplatte mit einer photovoltaischen sekundären (341-348) oder mit einer anderen photovoltaischen tertiären Solarplatte auf Seiten parallel zu den Seiten anliegt, mit denen die primäre und sekundäre Solarplatte aneinander anliegen, wobei die entfaltbare Struktur (72) ferner ein drittes Gelenksystem (16) für jede photovoltaische tertiäre Solarplatte umfasst, wobei jedes der Gelenksysteme ein Schwenken der photovoltaischen tertiären Solarplatte relativ zu der photovoltaischen Solarplatte zulässt, an der sie entlang einer Achse im Wesentlichen parallel zu den Seiten anliegt, auf denen die primäre, sekundäre (341-348) und tertiäre photovoltaische Solarplatte aneinander anliegen.

3. Entfaltbare Struktur nach einem der Ansprüche 1 und 2, so konfiguriert, dass in einer Verstaukonfiguration Antennenplatten (151-153, 155-157) und die Solarplatten (331-334, 341-348) parallel zueinander gestapelt sind, und so, dass in einer Betriebskonfiguration die Antennenplatten (151-157) global eine im Wesentlichen flache und kontinuierliche Nutzfläche (15A) bilden und jede Solarplatte (331-334, 341-348) lokal eine im Wesentlichen ebene und kontinuierliche Nutzfläche bildet.

4. Entfaltbare Struktur nach einem der vorherigen Ansprüche, wobei eine der Antennenplatten (154) so ausgelegt ist, dass sie an einer ersten Fläche (14A) eines Gehäuses (14) des Satelliten (31, 71) befestigt werden kann, wobei Antennenplatten (151-153) eines ersten Teilsatzes und die photovoltaischen Solarplatten (331, 332) in Anlage an einer der Antennenplatten des ersten Teilsatzes gegen eine zweite Fläche (14D) des Gehäuses (14) gestapelt werden können, wobei Antennenplatten (155-157) eines zweiten Teilsatzes und die photovoltaischen Solarplatten (333, 334) in Anlage an einer der Antennenplatten des zweiten Teilsatzes gegen eine dritte Fläche (14C) des Gehäuses (14) gestapelt werden können, wobei die zweite und die dritte Fläche (14C, 14D) des Gehäuses (14) im Wesentlichen senkrecht zur ersten Fläche (14A) des Gehäuses (14) sind.

5. Entfaltbare Struktur nach Anspruch 4, wobei die Antennenplatten (151-153) des ersten Teilsatzes und die photovoltaischen Solarplatten (331, 332) in Anlage an einer der Antennenplatten des ersten Teilsatzes so gestapelt werden können, dass eine der photovoltaischen Solarplatten (331, 332) eine letzte Außenschicht des Stapels von Platten bildet, wobei die Antennenplatten (155-157) des zweiten Teilsatzes und die photovoltaischen Solarplatten (333, 334) in Anlage mit einer der Antennenplatten des zweiten Teilsatzes so gestapelt werden können, dass eine der photovoltaischen Solarplatten (333, 334) die letzte Außenschicht des Plattenstapels bildet.

6. Entfaltbare Struktur nach Anspruch 5, wobei die photovoltaischen Solarplatten (331-334), die eine letzte Außenschicht eines Plattenstapels bilden, so gestapelt werden können, dass ihre Nutzflächen nach außen orientiert sind.

## Claims

1. A deployable structure designed to equip a satellite (71), **characterised in that** it comprises:
▪ a set of antenna panels (151-157) each having a substantially rectangular useful surface, said antenna panels being in abutment with each other on first sides parallel to each other;
▪ at least one photovoltaic solar panel (331-334), each photovoltaic solar panel having a substantially rectangular useful surface and being in abutment with an antenna panel (151, 157) on a second side of said antenna panel perpendicular to said first sides;
▪ first hinge systems (16), each of said hinge systems (16) allowing an antenna panel (151, 157) to pivot relative to an adjacent antenna panel along an axis substantially parallel to said first sides of said antenna panels;
▪ a second hinge system (19) for each photovoltaic solar panel (331-334), each of said hinge systems (19) allowing a photovoltaic solar panel (331-334) to pivot relative to the antenna panel (151-157) with which it is in abutment along an axis substantially parallel to said second side of said antenna panel,
at least one photovoltaic solar panel comprising a main photovoltaic solar panel (331-334) and at least one secondary photovoltaic solar panel (341-348), said main photovoltaic solar panel (331-334) being in abutment with the considered antenna panel (151-157), each secondary photovoltaic solar panel (341-348) being in abutment with said main photovoltaic solar panel (331-334) on one of the sides perpendicular to the side on which said main photovoltaic solar panel (331-334) is in abutment with the considered antenna panel (151-157), said deployable structure (72) further comprising a third hinge system (16) for each secondary photovoltaic solar panel (341-348), each of said hinge systems allowing said secondary photovoltaic solar panel (341-348) to pivot relative to said main photovoltaic solar panel (331-334) along an axis substantially parallel to the sides on which they are in abutment.

2. The deployable structure according to claim 1, wherein at least one photovoltaic solar panel comprising a main photovoltaic solar panel (331-334) and at least one secondary photovoltaic solar panel (341-348) further comprise at least one tertiary photovoltaic solar panel, each tertiary photovoltaic solar panel being in abutment with a secondary photovoltaic solar panel (341-348) or with another tertiary photovoltaic solar panel on sides parallel to the sides with which said primary and secondary solar panels are in abutment with each other, said deployable structure (72) further comprising a third hinge system (16) for each tertiary photovoltaic solar panel, each of said hinge systems allowing said tertiary photovoltaic solar panel to pivot relative to the photovoltaic solar panel with which it is in abutment along an axis substantially parallel to the sides on which said primary, secondary (341-348) and tertiary photovoltaic solar panels are in abutment with each other.

3. The deployable structure according to any one of claims 1 and 2 , configured so that, in a stowed configuration, antenna panels (151-153, 155-157) and said solar panels (331-334, 341-348) are stacked parallel to each other, and so that, in an operating configuration, said antenna panels (151-157) globally form a substantially flat and continuous useful surface (15A) and each solar panel (331-334, 341-348) locally forms a substantially flat and continuous useful surface.

4. The deployable structure according to any one of the preceding claims, wherein one of said antenna panels (154) is designed to be fixed to a first face (14A) of a shell (14) of said satellite (31, 71), with antenna panels (151-153) of a first sub-set and said photovoltaic solar panels (331, 332) in abutment with one of the antenna panels of said first sub-set being designed to be stacked against a second face (14D) of said shell (14), with antenna panels (155-157) of a second sub-set and said photovoltaic solar panels (333, 334) in abutment with one of the antenna panels of said second sub-set being designed to be stacked against a third face (14C) of said shell (14), said second and third faces (14C, 14D) of said shell (14) being substantially perpendicular to said first face (14A) of said shell (14).

5. The deployable structure according to claim 4, wherein said antenna panels (151-153) of said first sub-set and said photovoltaic solar panels (331, 332) in abutment with one of the antenna panels of said first sub-set are designed to be stacked so that one of said photovoltaic solar panels (331, 332) forms the final outer layer of the stack of panels, with said antenna panels (155-157) of said second sub-set and said photovoltaic solar panels (333, 334) in abutment with one of the antenna panels of said second sub-set being designed to be stacked so that one of said photovoltaic solar panels (333, 334) forms the final outer layer of the stack of panels.

6. The deployable structure according to claim 5, wherein said photovoltaic solar panels (331-334) forming a final outer layer of a stack of panels are designed to be stacked so that their useful surface is oriented outwards.
